# EUROPEAN PATENT APPLICATION

(11) **EP 4 470 974 A1**
(43) Date of publication of application: **04.12.2024**
(21) Application number: 23382532.2
(22) Date of filing: 02.06.2023
(51) Int. Cl.: C01B 32/318, C01B 32/336

(54) **METHOD FOR THE PRODUCTION OF ACTIVATED CHARCOAL**

(71) Applicant: Consejo Superior de Investigaciones Cientificas, 28006 Madrid (ES)
(72) Inventor: Undabeytia López, Tomás, Sevilla (ES); De la Rosa Arranz, José María, Sevilla (ES); Almeida de França Miller, Ana Zelia, Sevilla (ES); Diéguez Alonso, Alba, Berlin (DE); Behrendt, Frank, Berlin (DE); Almuiña Villar, Hernán, Berlin (DE)
(74) Representative: Pons

(57) **Abstract**

The present invention relates to a method for obtaining an activated charcoal capable of removing, by means of adsorption and filtration, organic water pollutants, particularly emerging organic pollutants such as medicinal drugs. Said method is based on pyrolysis and physical activation in the absence of oxygen, with water vapour (40 % v/v) from a mixture of waste rice crop and pine wood biomass. The product obtained by means of the present invention belongs to the field of water purification through the removal of pollutants.

## Description

The present invention relates to a method for obtaining an activated charcoal for its use in powder or granule form capable of removing, by means of adsorption and/or filtration, cationic, anionic and non-ionic organic pollutants of water intended for human consumption, from waste rice crop biomass, particularly rice straw and husks and pine wood shavings pyrolysed at 450 °C in a CO₂ atmosphere and its subsequent pyrolysis and activation at high temperature in an atmosphere of H₂O (40%) and N₂ (60%) vapour.

The production process uses a mixture of waste biomass of little commercial value, such as rice straw and recycled pine wood. The activation process uses a mixture of water vapour and N₂, which can be recirculated. This method recovers two waste biomasses, such as used pine wood shavings and rice straw, avoids the use of chemical agents in the activation process and the application of CO₂, during activation, reducing the risk of emission into the atmosphere of greenhouse gases in the final phase. The product obtained meets the existing Spanish regulations for the commercialisation of activated charcoals (UNE EN 12901, 12902 and 12915-1) and its effectiveness in the removal of organic pollutants (such as drugs) in aqueous solution has been verified.

The present invention falls within the field of the production from rice biomass of activated charcoal valid for its use in water treatment and purification.

### TECHNICAL SECTOR AND OBJECT OF THE INVENTION

The present invention belongs to the sector of water purification through the removal of pollutants.

Specifically, the invention relates to a method for obtaining an activated charcoal capable of removing, by means of adsorption or filtration, organic water pollutants, particularly emerging organic pollutants such as medicinal drugs. Said method is based on pyrolysis and physical activation in the absence of oxygen, with water vapour, of a mixture of residual biomass from rice crop and pine wood.

### BACKGROUND OF THE INVENTION

Today activated charcoal or active charcoal (AC) is well known for its adsorption power, being commonly used for water and gas purification, through adsorption and/or filtration processes that allow the removal of a wide variety of polluting or toxic substances, making it useful in areas as diverse as mining, agriculture, forestry, fishing industry, food, pharmaceutical and medical industry, water purification, wastewater treatment, chemical manufacturing and an extensive etcetera. In recent years, one of the most demanded applications of activated charcoal is the removal of organic pollutants present in water intended for human consumption, in purification processes (Zhang, W., Q.G. Chang, W.D. Liu, B.J. Li, W.X. Jiang, L.J. Fu, et al. Selecting activated charcoal for water and wastewater treatability studies. Environ. Prog. Sustainable Energy, 26 (2007), 289-298).

Since its inception, activated charcoal has been prepared from a wide variety of materials, but the most used have been the products of coal mining and vegetable materials, mainly wood and agroforestry residues, like coconut shell. The ideal characteristics for a material to be a good activated charcoal precursor are: i) high carbon content, ii) moderate ash content and iii) adequate structure and texture to obtain a product with high resistance and internal porosity. Agricultural residues (biomass) have been one of the precursors that have aroused the most interest as they are rich in lignocellulosic material, which is mainly composed of cellulose, hemicellulose and lignin. The proportion of said components varies depending on the type of material, lignin being the main responsible for the porosity of activated charcoal, being the main contributor in the formation of charcoal, substrate in the activation process. Lignin is a polymer that is highly resistant to biodegradation and works as a structural support for plants.

The synthesis process of activated charcoal involves two well-defined steps: i) carbonisation/pyrolysis of the precursor, charcoal, and ii) the activation of charcoal, which can occur independently or simultaneously.

Pyrolysis consists of heating at high temperatures (350-950 °C) in the absence of oxygen (O₂ ≤ 2%) to prevent combustion. During pyrolysis, dehydration reactions, cyclisation, condensation and fragmentation occur. The resulting solid fraction is a carbonaceous material (≥ 50% C by weight, on a dry and ash-free basis) highly aromatic, generally having high porosity and stability.

The degree of porosity, which is usually measured as the Specific Surface Area is a determining factor of the capacity of the charcoal produced for its subsequent use as an adsorbent. There is a direct relationship between the charcoal production temperature and the specific surface area up to relatively high temperatures. The higher the temperature, the higher the charcoal porosity. However, from relatively high temperatures (> 600-800 °C, depending on the biomass and other conditions of the production process) a decrease in the internal surface area can be observed due to a greater rearrangement of the charcoal microstructure. Other factors such as the composition of the precursor material, of the atmosphere, the heating rate, or the pressure during the production process can also play a very important role.

The activation step consists of contacting the pyrolysed charcoal at a relatively high temperature with an oxidising agent, generating an increase in porosity and a chemical modification of the charcoal surface, properties which are responsible for the adsorption capacity of activated charcoals.

Chemical activation consists of impregnating the charcoal produced via pyrolysis with an activating chemical substance and subsequent incubation at high temperatures (in the 400-800 °C range) in a controlled atmosphere (inert gas). The most commonly used chemicals are: H₃PO₄, H₂SO₄, HNOs, ZnCl₂, NaOH and KOH. Although this type of chemical activation process is generally effective, the use of these chemical agents has two major drawbacks: on the one hand, highly reactive gases that are harmful to health are released as a result of the reactions and evaporation at high temperatures of acids and oxidising compounds and, on the other hand, it is necessary to verify the removal of the activating chemical substance once the process is finished. Mineral acids, widely used as chemical activating agents, stand out negatively due to their danger in reactions at high temperatures.

Based on this background, the development is required of novel methods for obtaining activated charcoals that can be used to remove organic pollutants from water that overcome the aforementioned drawbacks.

### DESCRIPTION OF THE INVENTION

In a first aspect, the present invention relates to a method for obtaining an activated charcoal, preferably in the form of granules, that by subsequent grinding can be turned into and used as a powder. Both types of charcoal are capable of removing organic pollutants present in water through adsorption and/or filtration processes.
Therefore, the object of the present invention is a method for obtaining an activated charcoal suitable for removing organic pollutants from water through adsorption and filtration processes, comprising the following steps:
1) mixture of waste rice crop and pine wood shavings biomass in a proportion comprised between 40% - 60% by weight of rice biomass and 60% - 40% by weight of pine wood shavings;
2) carbonisation of the mixture obtained in step 1) at a temperature between 400 °C and 500 °C, in an inert atmosphere due to the presence of CO₂ in a fixed bed reactor;
3) pyrolysis and activation of the charcoal obtained in step (2) at a temperature between 700 °C and 800 °C, in the presence of a mixture of water vapour (40% v/v) and an inert gas, preferably N₂ (60% v/v), for a period of time of at least 240 min;
4) cooling of the charcoal obtained in step (3) in the presence of N₂ (100% v/v) down to room temperature.

In a preferred embodiment of the invention, rice crop biomass is selected from rice straw and rice husk.
Step 2) of the method is preferably carried out:
- at a temperature of between 430 °C and 475 °C;
- for a period of time between 15 min and 60 min;
- in the presence of another inert gas;
Step 3 is preferably carried out for a period of time between 15 min and 240 min.
Optionally, a final step of grinding to a size of less than 0.180 mm is included in the method in order to be able to use same as activated charcoal in powder form.
Particle sizes are determined by means of length measurement with a calliber on a representative sample, preferably 100 particles.
The method of the present invention
- allows rice straw, a waste biomass of little commercial value, to be recycled and recovered;
- avoids the use in the activation of chemical compounds such as mineral acids, which have a great environmental impact and great danger for operators in conventional production plants;
- allows the concentration of organic pollutants present in the water to be reduced, particularly emerging organic pollutants.

Step (2) of the method of the present invention relates to the carbonisation of waste rice crop and pine wood biomass, dried at room temperature and less than 1 cm in size, which comprises silica, at a temperature of between 400 °C and 500 °C, preferably 450 °C.
Rice straw is made up of silica, hemicellulose, cellulose and lignin, although the composition of rice straw varies considerably from one variety to another, the percentage of lignin being significantly lower than that of the coconut shell (36% by weight) which is one of the most widely used waste biomass for the production of activated charcoal. Rice straw has a low hardness, this being an advantage to be used as a precursor of an activated charcoal in granule form, facilitating its cutting and grinding. Furthermore, it has a pH close to 7, a high water retention capacity, about 100% by weight, and has a high silica content. The presence of silica prevents the collapse of the structure of the active charcoal obtained during pyrolysis at high temperature, required for the method of the present invention.

Step (2) of the method of the present invention is carried out in the absence of oxygen to avoid combustion of the biomass. Furthermore, said step of the method of the present invention is carried out in the presence of CO₂, as an inert gas as it has a very low chemical reactivity. The CO₂ used remains partially adsorbed on the surface of the activated charcoal produced, so that the use of CO₂ coming from combustion processes contributes to the partial sequestration of this greenhouse gas.

In addition, step (2) of the method of the present invention is carried out for a period of time between 15 min and 60 min in a first reactor, depending on the volume of the reactor and the feeder, which can be continuous (such as a rotary screw reactor) or batch (such as a fixed bed reactor).

During the carbonisation of step (2) of the process of the present invention, dehydration reactions, cyclisation, condensation and fragmentation occur. The volatile substances that are generated, which include a large number of compounds including alcohols, carbohydrates, phenols, hydrocarbons (CO, CO₂, H₂), among others, are evacuated and condensed externally in order to reduce their excessive condensation on the surface of the char produced during step (2). It is important to apply a continuous flow of CO₂ during this step, which minimises the condensation of organics in the solid and increases carbonisation efficiency.

Step (3) of the method of the present invention relates to the pyrolysis and simultaneous activation of the charcoal obtained in step (2) at a temperature between 700 °C and 800 °C, preferably at a temperature of 750 °C. The temperature at which step (3) is carried out must always be higher than the temperature of step (2) for the activation to be effective.

Step (3) of the method of the present invention is carried out in the presence of a mixture of oxidising gases formed by water vapour (40% w/v) and an inert gas, preferably nitrogen gas (N₂; 60% v/v). To avoid condensation of water vapour on charcoal obtained in step (2), the water vapour is not directly supplied at the start of step (3), but when the temperature of the reactor bed is higher than 200 °C. Besides, the gas mixture of step (3) includes the presence of an additional inert gas flow (N₂; 60 % v/v), which helps the generation of pores and consequently improves the adsorption properties of the final activated charcoal obtained.

Step (3) of the method of the present invention is carried out in a second fixed bed reactor for a period of time between 15 min and 240 min, depending on the volume of the reactor to guarantee the complete activation and homogeneity of the resulting carbon.

The last step of the method, step (4) relates to the cooling of the charcoal obtained in step (3) in the presence of N₂ (gas) down to room temperature. Said inert gas has been defined earlier in the text, and its use prevents the reaction of the activated charcoal produced with reactive gases that can saturate the pores and reduce its capacity as a filter medium.

The activated charcoal obtained by means of the method of the invention presents:
- alkaline pH, greater than 9
- Carbon content greater than 50% (w/w)
- Ash content less than 15% (p/p)
- Moisture content less than 5% (p/p)
- Micropores (pores up to 2 nm), mesopores (pores with a diameter between 2 and 50 nm) and macropores (pores with a diameter greater than 50 nm) homogeneously distributed in the activated charcoal.
- Water retention capacity values greater than 1000% (p/p)
- Specific internal surface area values determined with the BET method (based on N₂ adsorption) greater than or equal to 600 m²/g.
- Iodine index values greater than 600 mg l/g.
- Granular texture, with a particle size between 2 mm and 9 mm.
- Content of water-extractable metals (mg L⁻¹):
   As <10
   Cd <0.5
   Cr <5
   Hg <0.3
   Ni <15
   Pb <5
   Sb <3
   Se <3
- Sum of water-extractable polycyclic aromatic hydrocarbons < 20 ng L⁻¹

The charcoal obtained from the mixture of waste rice crop and pine wood biomass by means of the method of the present invention meets all the requirements demanded by current legislation in Spain to be used as activated charcoal (UNE EN 12901, 12902 and 12915-1), so it is suitable to be used in water purification.
It has been verified that the activated charcoal object of the present invention allows exhaustive removal of cationic, anionic and non-ionic organic pollutants in water.

The adsorbent power of the activated charcoal obtained through the present invention was tested for the removal of organic pollutants present in surface waters, and of a different nature, the pH values generally being found as neutral molecules (carbamazepine, acetaminophen), anionic molecules (salicylic acid, diclofenac and sulfamethoxazole) and cationic molecules (atenolol). The removal of these molecules ranges between 95-100% for concentrations of adsorbent of 0.1 g/l and of pollutant of 10 mg/l, and with a removal efficiency equal to or greater than a commercial activated charcoal under equal experimental conditions. Likewise, the filtering power of the material obtained in granular form has also been tested, obtaining a retention capacity much higher than that of a filter filled with a commercial activated charcoal, especially with anionic pollutants.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following assays and figures are provided by way of illustration and are not intended to limit the present invention.

### BRIEF DESCRIPTION OF THE FIGURES

**Figure 1****.** Descriptive summary diagram of the method of the invention.
**Figure 2****:** Medicinal drug elution curves (AT, ACTM, DC, CBZ and SMX) in columns filled with CAC and charcoal made from the mixture of rice crop and pine wood biomass using different inert atmospheres for their activation. The initial solution contained 1 mg/l of each of the medicinal drugs.

### EMBODIMENT OF THE INVENTION

### Production of activated charcoal from a mixture of rice straw and pine wood

The pyrolysis and activation process of the mixture of rice straw and pine wood to produce the activated charcoal that filters organic pollutants in water has been carried out in 4 steps following the following method:
Step 1: Conditioning and mixing. Prior to being subjected to carbonisation, the materials must be dried (humidity < 5%), homogenised and mixed (50% w/w).
Step 2: Carbonisation or pre-pyrolysis. Heating to 450 °C is carried out in a continuous flow screw reactor, also supplied by an endless screw, to achieve the devolatilisation of the biomass in the presence of a continuous flow of N₂, i.e., in the absence of oxygen.

To carry out this method, the reactor is preheated to the desired temperature (450 °C), a current of N₂ of 3 l/min is circulated and the rice straw is carbonised for 15 minutes. The residence time must be adjusted to the volume of the reactor and load to guarantee the carbonisation of all the material.

Step 3: Pyrolysis and activation. This step is carried out in a fixed bed reactor, at a temperature of 750 °C (measured at the centre of the bed) under a continuous flow of inert gas. The activation process is carried out by incorporating water vapour (40% v/v) at high temperature (at least 200 °C) with a stream of: (i) N₂ (60 % v/v) o (ii) CO₂ (40 % v/v) and N₂ (20 % v/v). To avoid condensation of water vapour on the cold material, same is not supplied from the beginning, but when the temperature of the reactor bed is higher than 200 °C. In other words, heating is started under a stream of pure N₂ gas or CO₂ and approximately 15 min later, when temperatures in the bed are above 200 °C, the water vapour is also supplied. Once the temperature in the centre of the bed has reached the target temperature, it remains so for 240 min. In this way, the aim is to guarantee the maximum possible homogeneity in the final material. The residence time must be adjusted to the volume of the reactor.

Step 4: Cooling. The material once pyrolysed and activated, is allowed to cool inside the reactor without heating, down to room temperature, maintaining a stream of pure N₂ during cooling.

### ASSAYS

Next, the invention will be illustrated by means of assays carried out by the inventors which demonstrate that the product of the invention: 1) meets the legal requirements for its sale as active or activated charcoal in the European Union, and 2) it is an effective material for the removal of organic pollutants in water.

**Comparative assays:** To show the improvement that this process represents compared to other activation processes, a comparison has been made with:
- Charcoals obtained using only pyrolysis at low temperature (up to 450 °C) and inert atmosphere.
- Charcoals obtained with the method object of this patent using a mixture of waste rice crop and pine wood biomass.
- Charcoals obtained with the method object of this patent activated using a different gas mixture (process 3), consisting of water vapour (40% v/v), CO₂ (40% v/v) and N₂ (20% v/v), or water vapour (40% v/v) and N₂ (60% v/v).
- Granulated commercial activated charcoal produced from coconut fibre wood.

### Assay 1. Composition and physical properties of charcoals produced from the mixture of rice straw and pine wood, and comparative samples:

Table 1 shows the nomenclature used for the charcoals tested in which C_AM indicates Active charcoal mixed with Rice straw and Pine wood, the next number indicates the pyrolysis temperature, and the last letters relate to step 3 of activation (H₂O40 %N₂60 % is physical activation with 40% (v/v) pure water vapour and N₂ (60% v/v), and the application in the activation with the mixture of gases 40% water vapour (v/v), 40% CO₂ and 20% N₂ has also been tested. For comparative purposes, it has been tested under the same experimental conditions using rice husk instead of rice straw.

**Table 1. Sample codes and equivalence**

| **Code** | **Sample** |
|---|---|
| AM | Mixture of rice straw and pine wood (shavings) dry (40 °C) biomass |
| ACM | Mixture of rice husks and pine wood (shavings) dry (40 °C) biomass |
| C_AM-450 | Charcoal mixture of rice straw and 450 °C-pyrolysed pine wood biomass |
| C_ACM-450 | Charcoal mixture of rice husk and 450 °C-pyrolysed pine wood biomass |
| C_AM-750_ac_H₂O40 %N₂60 % | Charcoal mixture of rice straw and 750 °C-pyrolysed pine wood biomass, activated: 40 vol.% H₂O, 60 vol.% N₂ |
| C_AM-750_ac_H₂O40 %CO₂40 % | Charcoal mixture of rice straw and 750 °C-pyrolysed pine wood biomass, activated: 40 vol.% H₂O, 40 vol. % CO₂, and 20 vol.% N₂ |
| C_ACM-750_ac_H₂O40 %N₂60 % | Charcoal mixture of rice husk and 750 °C-pyrolysed pine wood biomass, activated: 40 vol.% H₂O, 60 vol.% N₂ |
| C_ACM-750_ac_H₂O40 %CO₂40 % | Charcoal mixture of rice husk and 750 °C-pyrolysed pine wood biomass, activated: 40 vol.% H₂O, 40 vol. % CO₂, and 20 vol.% N₂ |
| CAC | Granulated commercial activated charcoal produced from carbonised coconut fibre. |
| C_AC-750_ac_H₂O40 %N₂60 % | Charcoal from pure rice husk, pyrolysed at 750 °C, activated: 40 vol.% H₂O, 60 vol.% N₂ |

Methodology used in the physical-chemical characterisation of the activated charcoals:
- The pH and electrical conductivity (EC) of each sample were measured respectively with a Crison 40 pH-meter and a Crison Basic 20 conductivity meter (Crison, Spain) in a charcoal mixture: distilled water 1:10 (p/v). The mixture was stirred for 30 min and allowed to settle for another 30 min before analysis.
- The water retention capacity (WHC) was calculated by weighing the dried and homogenised sample before and after saturating same with pure water (milli-Q quality) and allowing same to drain for 2 hours. The WHC is calculated as the quotient between the weight of the wet (drained) sample and the dry sample, expressed as a percentage.
- The total carbon (C), hydrogen (H), nitrogen (N) and sulphur (S) content, was measured following the usual method in this scientific community, in other words, combustion of the sample (4-20 mg) in an O₂ atmosphere and in the presence of a catalyst, at a temperature of approximately 1150-1200 °C; followed by reduction of nitrogen and sulphur oxides at about 850 °C and also in the presence of a catalyst. The final products are CO₂, H₂O, N₂ and SO₂ which are quantified in a thermal conductivity detector. Helium (He) is used as a carrier gas. The instrument used to make these measurements was the Elementar EL Vario III (Elementar Analysensysteme GmbH). The samples were dried (90 min at 105 °C) before carrying out the elemental analysis, so the C, H and N measured are on a dry basis.
- The iodine value is commonly determined in activated charcoals to assess its quality as an adsorbent, due to the relationship between this index and the pore distribution (Zhang et al., 2007). This index measures the amount of iodine adsorbed (in mg) per 1 g of activated charcoal and is considered a relative indicator of its porosity. To that end, firstly, standard sodium thiosulphate and iodine solutions were prepared. Subsequently, after conditioning the samples, the amount of iodine absorbed by the sample soaked in the standard iodine solution is measured by titration with sodium thiosulphate. The iodine value results are obtained based on the Freundlich isotherm, and are expressed in mg of iodine absorbed per g of sample. To obtain them, measurements of three different weights of each sample were made.
- The ash content (in % with respect to the weight of the initial sample) was determined on samples previously dried (at 105 °C) and homogenised, which were subjected to heating at 750 °C for 5 hours in porcelain crucibles.
- The porosity of the vegetable charcoals was characterised by measuring the adsorption of N₂ and CO₂ (NOVA 2200 and Autosorb-1-MP; *Quantachrome Instruments).* The data processing was done with the NovaWin Software *(Quantachrome Instruments).* N₂ adsorption measurements they were made at approximately 77 K in a liquid nitrogen bath. The complete isotherm was measured, including adsorption and desorption, from relative pressures (P/Po) in the range of 1×10⁻⁵ - 1×10⁻³ up to relative pressures of 0.99, wherein P is the pressure of N₂ in the measurement cell and Po is the saturation pressure of N₂ at approximately 77 K. The method of determining the specific surface area BET (in the range of relative pressures of 0.01 - 0.2) was applied to determine the total internal specific surface area. The QSDFT *(Quenched Solid Density Functional Theory)* was used, considering cylindrical and slit-shaped pores to the complete adsorption isotherm to determine the specific internal surface area and specific volume of micropores and mesopores (up to 33 nm in diameter).
- The total volume of pores was determined considering the total volume of N₂ adsorbed at a relative pressure close to 1 atmosphere. For adsorption measurements with CO₂, the adsorption and desorption isotherms were also measured in the range of relative pressures of 1×10⁻⁵ - 0.028. The NLDFT (*non-local density functional theory)* method was applied to determine the specific internal surface area and specific micropore volume. The applied methods are included in the NovaWin Software (Quantachrome Instruments).
- The particle sizes are determined by taking a similar amount of material for all the samples (2 gr for example), 100 particles are counted and their length is measured with a small calliber.

All characterisation analyses were performed threefold.

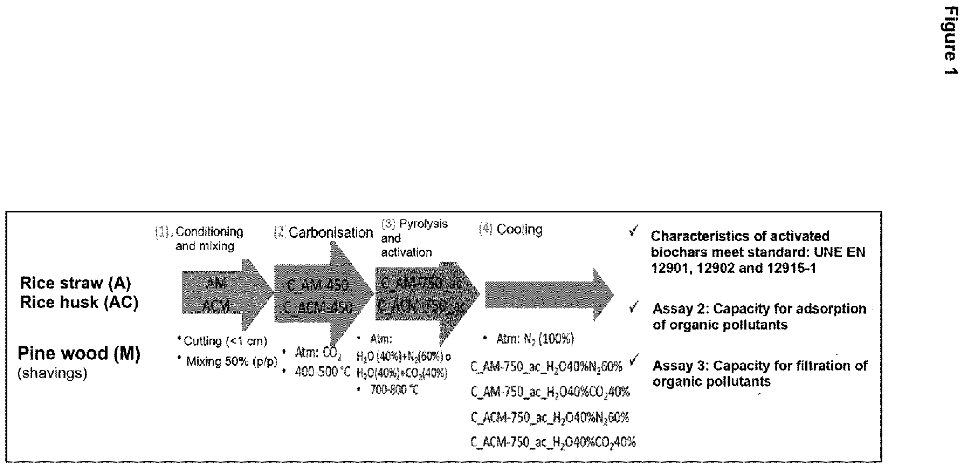

Table 2 shows the physical and chemical properties measured, as well as the carbon, nitrogen and hydrogen content from the CA samples, while Figure 1 shows the parameters related to porosity. Also included are charcoals obtained from a mixture of rice husks and pine wood) and a commercial activated charcoal (CAC), which will be used later in assays 2, adsorption assays and assay 3, filtration assays.

**Table 2: pH measurements, electric conductivity, WHC and ash content**

| | **pH** | **Electric conductivity** | **WHC** | **Ash Content** |
|---|---|---|---|---|
| **Code** | | (µS/cm) | (%) | (%) |
| C_AM-450 | 10.3±0.2 | 2008±46 | 544±25 | 30.1±6.5 |
| C_ACM-450 | 9.4±0.4 | 778±9 | 614±55 | 34.1±2.5 |
| C_AM-750_ac_H₂O40 %N₂60 % | 11.7±0.1 | 4235±49 | 1014±104 | 13.1±1.5 |
| C_AM-750 ac H₂O40 %CO₂40 % | 11.0±0.1 | 4385±205 | 1212±26 | 14.8±4.0 |
| C_ACM-750 ac H₂O40 %N₂60 % | 11.3±0.0 | 1688±25 | 848±55 | 29.0±1.6 |
| C_ACM-750 ac H₂O40 %CO₂40 % | 11.3±0.2 | 1796±47 | 874±54 | 36.2±0.2 |
| CAC | 10.2±0.1 | 783±9 | 145±8 | 1.3±0.1 |
| C_AC-750_ac_H₂O40 %N₂60 % | 11.2±0.2 | 227±5 | 684±32 | 44.8±1.9 |

All pyrolysed charcoals have an alkaline pH, as stated in the rule. The pH increases in all cases during the pyrolysis process from 7.2 (CA) to values above 9, being somewhat higher than that of the C_AM samples. This is due to the alkaline nature of the ashes, which tend to concentrate during carbonisation, which is also reflected in the increase in electrical conductivity values. The activation process significantly increased the WHC of the charcoals. The charcoals produced from the mixture with rice straw (C_AM) obtained the highest WHC values. The ash content is higher in the charcoals produced from the rice husk mixture. Only samples C_AM-750_ac_H₂O40 %N₂60 %, C_AM-750_ac_H₂O40 %CO₂40 % and CAC comply with the UNE EN 12915-1 standard, which indicates that the ash content must be less than 15%. The high ash content of all the ACM samples is mainly due to the higher silica content in the rice husk. The ash content in the C_AM samples can be further decreased if the ratio of biomass from pine wood in the initial pyrolysis process is increased, thus fulfilling the legal requirements for its use and commercialisation.

**Table 3: Elemental analysis.**

| | Elemental analysis (% w/w on dry basis) | | | |
|---|---|---|---|---|
| **Code** | **N** | **C** | **S** | **H** |
| AM | 0.27±0.01 | 45.3±0.2 | 0.15±0.02 | 6.41±0.04 |
| ACM | 0.48±0.03 | 44.1±0.2 | 0.13±0.02 | 6.25±0.03 |
| C_AM-450 | 0.35±0.01 | 73.3±0.1 | 0.21±0.01 | 3.47±0.01 |
| C_ACM-450 | 0.51±0.07 | 72.0±0.9 | 0.20±0.08 | 3.29±0.21 |
| C_AM-750_ac_H₂O40 %N₂60 % | 0.19±0.02 | 75.8±0.3 | 0.28±0.02 | 1.01±0.02 |
| C_AM-750_ac_H₂O40 %CO₂40 % | 0.18±0.01 | 70.6±0.1 | 0.29±0.01 | 0.91±0.01 |
| C_ACM-750_ac_H₂O40 %N₂60 % | 0.32±0.01 | 60.0±0.2 | 0.06±0.01 | 0.83±0.4 |
| C_ACM-750_ac_H₂O40 %CO₂40 % | 0.30±0.01 | 54.0±0.1 | 0.09±0.02 | 0.59±0.10 |
| CAC | 0.15±0.02 | 92.3±0.9 | 0.21±0.0 | 0.92±0.11 |

The C content increased during pyrolysis at 450 °C from 44-45 % of ACM and AM, up to values always above 75% for C_AM-750_ac_H₂O40 %N₂60 %. The charcoals produced from the AM mixture have a higher C content than the ACM charcoals for the same conditions. In relation to the activation conditions the atmosphere H₂O40 %N₂60 % produced higher C content than H₂O40 %CO₂40 %. The Hydrogen content was reduced during the pyrolysis process, this reduction being greater at higher temperatures. Accordingly, H/Cₐₜ ratios ofC_AM and C_ACM (pyrolysed) have very similar values (0.3-0.4), lower than that of the starting material (1.7). This fact indicates that during carbonisation a more aromatic material than the precursor biomass is produced and therefore the pyrolysed material has greater stability and aromaticity.

**Table 4: Iodine index and specific surface area.**

| | **Iodine value** | **Specific surface area (N₂ *adsorption)*** | |
|---|---|---|---|
| | | **(BET** | **TOTAL SSA-DFT** |
| **Code** | (mg l /g) | (m²/g) | (m²/g) |
| C_AM-450 | 216 | 16 | 12 |
| C_ACM-450 | 239 | 15 | 12 |
| C_AM-750_ac_H₂O40 %N₂60 % | 686 | 958 | 1024 |
| C_AM-750_ac_H₂O40 %CO₂40 % | 705 | 923 | 970 |
| C_ACM-750_ac_H₂O40 %N₂60 % | 487 | 680 | 747 |
| C_ACM750_ac_H₂O40 %CO₂40 % | 471 | 660 | 725 |
| CAC | 95 | 1080 | 960 |

The iodine value, traditionally used as an indicator of the adsorption power of a CA, increases with pyrolysis temperature and activation, but it also depends on the nature of the biomass. The iodine values of the C_AM samples were higher than those measured for the C_ACM samples for the same conditions.

Another relevant parameter for the application of a CA in water treatment is the specific surface area (SSA_{BET-N2}). Table 4 shows that the CAC (commercial) presented the highest value of SSA_{BET-N2} (1080 m²/g). This is probably due to the combination of the use of a very drastic activation process together with the use of starting materials, like coconut shell, which is typically used to produce commercial activated charcoals because the lignocellulosic richness in its composition allows activations at very high temperatures. In theory, the higher the SSA-_{BET-N2} parameter the greater the retention capacity of emerging organic pollutants in its pores must be. However, other factors are decisive in the adsorption capacity. The CAC sample, did not present a linear and direct relationship between the iodine index and the SSA-BET.

Table 4 shows that the higher SSA-_{BET-N2} values are obtained with the mixture of rice straw and pine wood activation with water vapour 40% (v/v) and N₂ (60% v/v). In other words, the water vapour atmosphere during the production process promoted a large increase in the porosity of the carbon.

The lower internal surface of the carbonised material at high pyrolysis temperatures of the C_ACM samples may be due to its higher silica (ash) content and the possible formation of crystalline microstructures (*"graphite-like microcrystallites").* This process results in less accessibility of N₂ to the pores and from there to a lower microporosity measured with N₂. In other words, the micropores have not disappeared, but have become partially inaccessible to N₂.

### Assay 2. Measurement of the adsorption capacity of six organic pollutants present in water by charcoals obtained from rice straw and pine wood, rice husks and pine wood, and comparison thereof with a commercial activated charcoal (CAC).

The following medicinal drugs were selected as models of organic pollutants with very different physicochemical properties: atenolol, AT; carbamazepine, CBZ; sulfamethoxazole, SMX; diclofenac, DC; salicylic acid, AS, and acetaminophen, ACTM. The individual adsorption of each of these 6 pollutants was carried out threefold with each charcoal sample in the form of granules obtained from the biomass mixture, and with the commercial CAC putting 100 mg of sample in contact with 20 ml of solution of each pollutant, the concentration of which was 10 mgL⁻¹.

After 24 h of contact under stirring, it was centrifuged and the pollutant in the supernatant was measured by means of high performance liquid chromatography with a diode array detector (HPLC-DAD). The chromatographic column was a reverse phase C₁₈ (15 mm × 4.6 mm i.d.; Novapack, Waters Co.). The mobile phases were 40% acetonitrile and 60% water acidified with H₃PO₄ at pH 2.5 for SMX; 45% methanol and 55% water acidified to pH 3.2 with glacial acetic acid for AT; 30% acetonitrile and 70% water containing 10 mM KH₂PO₄ titrated to pH 2.5 with phosphoric acid for CBZ; 35% water and 65% acetonitrile acidified with H₃PO₄ for DC; 40% methanol and 60% water acidified with trifluoroacetic acid for AS; 10% methanol and 90% water acidified with H₃PO₄ for ACTM.

The wavelengths used were 210 nm for CBZ, 230 nm for AT, 270 nm for SMZ, 227 nm for DC, 274 nm for AS and 244 nm for ACTM, while retention times were 5.25 min for CBZ, 2.01 min for AT, 2.25 min for SMX, 3.72 min for DC, 9.90 min for AS and 7.82 min for ACTM.

The results obtained for the 6 medicinal drugs are shown, which are frequently detected in secondary effluents but the concentration in water of which is not currently regulated (they belong to the so-called emerging pollutants). Nevertheless, one of them (DC) has been included in the watch list of substances for monitoring purposes at the European Union level in surface waters (EU Implementing Decision; 2018/840), due to its high ecotoxicity in the range found in surface waters.

These six pollutants at the pHs generally registered in the effluents are in the cationic form (AT), anionic form (SMX; DC; AS) and non-ionic form (CBZ, ACTM), serving as indicators of the effectiveness of the charcoal for the removal of organic pollutants with different physical-chemical properties.

Table 5 shows the activated charcoals used in this assay, and its corresponding code with the obtaining process.

**Table 5. Sample codes and equivalence.**

| **Code** | **Sample** |
|---|---|
| C_AM-750_ac_H₂O40 %N₂60 % | Charcoal mixture of rice straw and 750 °C-pyrolysed pine wood biomass, activated: 40 vol.% H₂O, 60 vol.% N₂ |
| C_AM-750_ac_H₂O40 %CO₂40 % | Charcoal mixture of rice straw and 750 °C-pyrolysed pine wood biomass, activated: 40 vol.% H₂O, 40 vol. % CO₂, and 20 vol.% N₂ |
| C_ACM-750_ac_H₂O40 %N₂60 % | Charcoal mixture of rice husk and 750 °C-pyrolysed pine wood biomass, activated: 40 vol.% H₂O, 60 vol.% N₂ |
| C_ACM-750_ac_H₂O40 %CO₂40 % | Charcoal mixture of rice husk and 750 °C-pyrolysed pine wood biomass, activated: 40 vol.% H₂O, 40 vol. % CO₂, and 20 vol.% N₂ |
| CAC | Granulated commercial activated charcoal produced from carbonised coconut fibre. |

The results shown in Table 6 indicate that the removal capacity of these organic pollutants by biochars is comparable to that of commercial activated charcoal. In fact, the activated biochars produced from the mixture of rice and pine wood biomass proved to be more effective than CAC in the removal of neutral pollutants from water. The efficiency between CAC and charcoals synthesised from biomass mixtures was similar in the removal of anionic and cationic pollutants.

**Table 6. Percentages of removal of organic pollutants in water by activated charcoals.**

| **Code** | **Atenolol (AT)** | **Carbamazepin e (CBZ)** | **Sulfamethoxazol e (SMX)** |
|---|---|---|---|
| C_AM-750_ac_H₂O40 %N₂60 % | 95.025±0.3 0 | 100 | 99.99±0.01 |
| C_AM-750_ac_H₂O40 %CO₂40 % | 94.74±0.49 | 100 | 99.99±0.01 |
| C_ACM-750_ac_H₂O40 %N₂60 % | 93.62±0.01 | 100 | 99.99±0.01 |
| C_ACM-750_ac_H₂O40 %CO₂40 % | 99.86±0.23 | 100 | 100 |
| CAC | 95.68±0.08 | 99.96±0.01 | 99.90±0.03 |

**Table 6 below. Percentages of removal of organic pollutants in water by activated charcoals.**

| **Code** | **Diclofenac (DC)** | **Salicylic acid (AS)** | **Acetaminophen (ACTM)** |
|---|---|---|---|
| C_AM-750_ac_H₂O40 %N₂60 % | 99.98±0.04 | 100 | 100 |
| C_AM-750_ac_H₂O40 %CO₂40 % | 99.96±0.07 | 100 | 100 |
| C_ACM-750_ac_H₂O40 %N₂60 % | 99.97±0.05 | 100 | 100 |
| C_ACM-750_ac_H₂O40 %CO₂40 % | 100 | 100 | 100 |
| CAC | 99.99±0.01 | 100 | 99.99±0.01 |

The results show that the use of materials based on the pyrolysis and activation of biomass mixtures of pine wood and rice crop waste allow organic pollutants to be significantly removed, with special relevance in the so-called emerging organic pollutants (COES), such as medicinal drugs present in water. Said materials are an appropriate and sustainable substitute for activated charcoals that are currently on the market, and that usually come from mineral charcoal or vegetable charcoals from tropical farming waste.

### Assay 3. Water filtration assays of five organic pollutants through filters made with activated charcoals produced from a mixture of rice and pine wood biomass. Comparison with commercial CAC filter.

Duplicate column filtration experiments were performed, with a length of 21 cm and a diameter of 2 cm, containing a porous plate at the bottom, and which were filled with granular activated charcoals to a filter bed height of 8.5 cm. The corresponding amount, as well as their respective pore volume were:
- 2.37 g and 20.5 ml for C_AM-750_ac_H₂O40%N₂60%;
- 2.6 g and 20.78 ml for C_ACM-750_ac_H₂O40%N₂60%;
- 3.1 g and 20.8 ml for C_AM-750_ac_H₂O40%CO₂40% ;
- 2.7 g and 21.5 ml for C_ACM-750_ac_H₂O40%CO₂40%; and
- 14.3 g and 11.8 ml for CAC.
Glass wool (0.45 g) was placed on both sides of the column to prevent loss of material or potential blockage of the porous plate. A solution was continuously passed to each of them simultaneously containing the medicinal drugs of assay 2 with the exception of salicylic acid, at an individual concentration (Co) of each of them of 1 mg L⁻¹. The flow rate in the columns was constant, at 10 ml min⁻¹ by using a peristaltic pump. Aliquots were taken after The filtration process was maintained for 80 h, in which aliquots were taken at various time intervals for the analysis of the medicinal drugs at the inlet and outlet of the columns.

Analysis of the medicinal drugs was performed on a UPLC (Acquity Class H plus) coupled to a triple quadrupole detector (Xevo TQ-XS; Agilent Tech., CA, USA) with an ion spray source operating in positive mode. The flow rate was 0.4 µl/min, column was Acquity UPLC BEH C18 (50 × 2.1 mm ID; 1.7 µm) operating at 40 °C and the injection volume was 10 µl. The binary mobile phase in gradient mode consisted of ultrapure water with 10 mM formic acid (mobile phase A) and acetonitrile (mobile phase B). The gradient used was from 0 to 12.0 min, a linear increase of B from 0% to 30%; from 12 to 16 min, continued to increase B up to 100%, and subsequently a linear decrease to 0% of B between 16 and 18 min. Quantification was performed using the transitions Q1 267-Q3 145 for AT; Q1 152-Q3 110 forACTM; Q1 254-Q3 156 for SMX; Q1 237-Q3 193 for CBZ; and Q1 296-Q3 214 for DC. Retention times were 2.46 min for ACTM; 3.03 min for AT; 6.72 min for SMX; 11.19 min for CBZ and 14.63 min for DC. The quantification limits were less than 25 ppt.

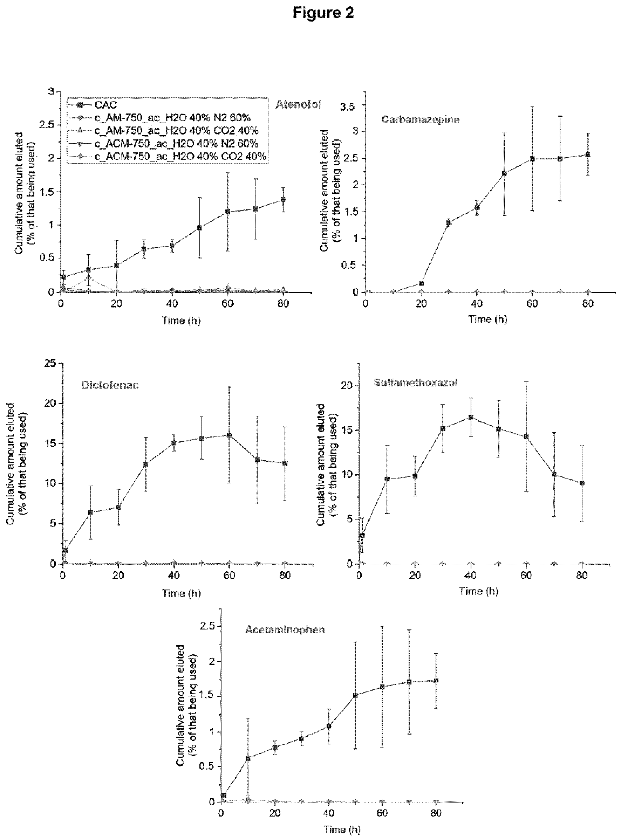

Figure 2 shows the results of the filtration assay with the different activated charcoals according to Table 5. It can be seen that the activated charcoals produced from a mixture of biomass object of the present patent, present a great retention of organic pollutants. However, the commercial charcoal used had low resolution in the removal of medicinal drugs, especially those of anionic nature, such as DC and SMX, the elution percentages of which reached around 15% after 80 h of operation. On the contrary, activated biochars completely retained SMX and very residual eluted amounts were detected from DC, less than 0.1% of the total amount applied. After 80 h, no elution was detected in the columns with activated biochars of the non-ionic pollutants CBZ and ACTM with the exception of a very residual amount with the biochar c_AM-750_ac_H2O 40% N2 60% (<0.03%). CAC elution percentages were improved with non-ionic pollutants, although they did not reach the effectiveness of activated biochars, obtaining elution values between 1.7 and 3% after 80 h of operation. A similar behaviour was observed with the AT cation. Very residual amounts of this pollutant were detected with activated biochars (<0.1% of the total applied), with the exception of c-ACM-750_ac_H2O 40% CO2 40%, which had a slightly higher elution.

In addition to being more effective as a filter material for activated biochars than CAC, it can be concluded that there is no significant difference between the material obtained through activation with 60% N₂ or 40% CO₂ and 20% N₂, and between the use of a rice husk or rice straw biomass. Activated biochar using rice straw is more convenient because of its lower ash content, conforming to current European legislation.

Moreover, the fact of the complete retention by the activated biochars of the neutral molecules CBZ and ACTM, and of the anionic molecule SMX versus marginal amounts of the anionic drug DC, indicates that not only the ionic state of the molecule determines the extent of removal but also specific interactions between the molecular structure of the analyte and the structural properties of the charcoals (acid sites, porosity, water penetration capacity, surface area, etc.).

The greater filtration capacity of activated biochars against CAC may also be due to the greater accessibility of the surface associated with mesopores, that allow these chemical interactions to be increased, which would result in faster adsorption kinetics, facilitating its retention. It must be taken into account that parameters used to indicate the quality of an activated charcoal in terms of pollutant retention, such as the surface area measured through the specific surface area, and the iodine value, do not correlate with the amounts retained by the filters. The amount of CAC material used, which has a greater surface area and iodine value, was of the order of 6 times greater in the filters than the amount of material used with activated biochars.

## Claims

1. A method for obtaining an activated charcoal suitable for removing organic pollutants from water through adsorption and filtration processes, comprising the following steps:
1) mixture of waste rice crop and pine wood shavings biomass in a proportion comprised between 40% - 60% by weight of rice biomass and 60% - 40% by weight of pine wood shavings;
2) carbonisation of the mixture obtained in step 1) at a temperature between 400 °C and 500 °C, in an inert atmosphere due to the presence of CO₂ in a fixed bed reactor;
3) pyrolysis and activation of the charcoal obtained in step (2) at a temperature between 700 °C and 800 °C, in the presence of a mixture of water vapour (40% v/v) and an inert gas, preferably N₂ (60% v/v), for a period of time of at least 240 min;
4) cooling of the charcoal obtained in step (3) in the presence of N₂ (100% v/v) down to room temperature.

2. The method according to claim 1 wherein the mixture of waste rice crop and pine wood shavings biomass is in a 50% / 50% by weight ratio.

3. The method according to claims 1 or 2, wherein the waste rice crop biomass is rice straw.

4. The method according to claims 1 or 2, wherein the waste rice crop biomass is rice husk.

5. The method according to any of claims 1 to 4, wherein the carbonisation of step 2 is carried out at a temperature between 430 °C and 475 °C.

6. The method according to any of claims 1 to 5, wherein the carbonisation of step 2 is carried out for a period of time between 15 min and 60 min.

7. The method according to any of claims 1 to 6, wherein step 2 is further carried out in the presence of another inert gas.

8. The method according to any of claims 1 to 7, wherein step 3 is carried out for a period of time between 15 min and 240 min.

9. The method according to any of claims 1 to 8 that includes a final step of grinding to a size of less than 0.180 mm, determined by means of length measurement with a calliber on a representative sample, to be able to be used as activated charcoal in powder form.
